# EUROPEAN PATENT APPLICATION

(11) **EP 2 088 009 A2**
(43) Date of publication of application: **12.08.2009**
(21) Application number: 09001597.5
(22) Date of filing: 05.02.2009
(51) Int. Cl.: B60G 11/28, F16F 9/05

(54) **Air spring piston**

(30) Priority: 08.02.2008 US 28049
(71) Applicant: Veyance Technologies, Inc., Fairlawn, OH 44333-3023 (US)
(72) Inventor: Rebernik, Jure, 42098 Sencur (SI); Matteweber, Uros, 4000 Kranj (SI); Kosir, Matej, 4290 Trzic (SI)
(74) Representative: Hellwig, Tillmann Johannes

(57) **Abstract**

An air spring piston includes an outer wall having a first end and a second end that defines an inner cavity having a centerline. The piston further includes at least one mounting boss for providing off-set mounting of the piston to a support. The at least one mounting boss has a geometric center that is spaced from the centerline of the inner cavity. Additionally, substantially the entire piston may be formed from a plastic. The piston may further include a support structure having at least one strut that does not intersect the centerline of the inner cavity.

## Description

### Technical Field

The invention relates to vehicle suspension systems, and more particularly, to a plastic piston for an air spring configured for off-set mounting.

### Background

Pneumatic springs, commonly referred to as air springs, have been used in conjunction with motor vehicles for a number of years to provide cushioning between movable parts of the vehicle primarily to absorb shock loads impressed on the vehicle axles by the wheels striking an object in the road, such as a bump, depression, or other obstruction. One basic design of pneumatic springs is referred to as a rolling lobe air spring, examples of which are illustrated in U.S. Patent Nos. 3,043,582; 5,535,994; and 6,460836.

Rolling lobe air springs typically include a flexible elastomeric reinforced sleeve that extends between a pair of end members. The sleeve is attached to the end members to form a pressurized chamber therebetween and the end members mount the air spring on spaced components or parts of the vehicle or other equipment for which shock absorption is desired. The internal pressurized gas, usually air, absorbs most of the motion impressed upon one of the spaced end members due to road shocks experienced by the vehicle. The end members move inwards and towards each other when the spring is in jounce and away and outwards from each other when the spring is in rebound. One of the end members is referred to as a retainer plate and sealingly couples to the sleeve. The retainer plate is used to mount the air spring to one part of the vehicle (e.g., vehicle body). The other end member may include an air spring piston. The piston provides both a means for mounting the air spring to another part of the vehicle (e.g., vehicle axle) and a surface for the rolling lobe sleeve to travel upon when the air spring is subjected to compression forces.

A number of air spring designs exist. By way of example, some air springs are designed to have center mounting. Center-mounted air springs are configured to mount to the vehicle such that the center point of the mounting is along the centerline of the air spring. The piston in center-mounted air springs has typically been formed from metal so as to withstand the forces acting thereon during jouncing. More recently, however, pistons for center-mounted air springs have been formed from hard thermoplastic materials. Plastic pistons are thought to provide certain advantages over metal pistons, including improved corrosion resistance, lower cost, lower weight, and other advantages.

In some applications, it may desirable to have off-set mounting at one or both of the end members of the air spring. Off-set mounting provides coupling to the vehicle such that the center point of the mounting is spaced from the centerline of the air spring. The off-set mounting subjects the air spring to altered and potentially increased loading, which must be accounted for in the overall design of the air spring. Accordingly, the piston for off-set mounted air springs is typically formed from metal so as to accommodate the increased loading.

In a manner analogous to center-mount air springs, recent attempts have been made to form the piston of off-set mounted air springs from plastics, and thus gain the benefits as outlined above. However, such attempts have proven problematic. In this regard, heretofore pistons formed primarily of plastic have failed to adequately accommodate the increased loading due to off-set mounting. Accordingly, in such off-set mounted designs, the plastic pistons have been supplemented with a metal (e.g., steel) backing plate that increases the structural integrity of the piston so as to accommodate the increased loading. The addition of the metal backing plate, however, destroys or significantly reduces the benefits gained by forming the piston from plastic.

Accordingly, there is a need for an improved air spring having a piston substantially formed of plastic and adapted for off-set mounting with a vehicle.

### Summary

An embodiment of the invention that addresses these and other drawbacks provides an air spring piston having an outer wall with a first end and a second end. In one embodiment, an end wall may substantially close the first end and the second end may be open. The outer wall defines an inner cavity of the piston having a centerline. The air spring piston further includes a support structure disposed in the inner cavity for providing structural support to the piston. The support structure includes a plurality of ribs projecting from the outer wall, such as in a generally radial direction relative to the centerline, and at least one strut. The strut includes a first end coupled to the outer wall at a first location and a second end coupled to the outer wall at a second location spaced from the first location such that the strut does not intersect the centerline of the inner cavity.

In one embodiment, the support structure includes a central hub disposed about the centerline of the inner cavity and at least one of the ribs extends from the outer wall to the central hub. Additionally, the support structure may include two such struts, which in one embodiment may be parallel to each other. The at least one strut may include a thickened portion intermediate the two ends of the strut, which in one embodiment may be hollow along at least a portion thereof. Moreover, the support structure may include at least one support tab having a first end coupled to the outer wall and a second end coupled to the at least one strut, such as along the thickened portion thereof. The piston may further include at least one mounting boss adapted to receive a fastener for securing the piston to a support. In one embodiment, the at least one mounting boss is coupled to the outer wall and disposed in the inner cavity. In such an embodiment, the at least one strut may couple to the outer wall through the mounting boss.

In another embodiment of the invention, an air spring piston includes an outer wall having a first end and a second end and defines an inner cavity of the piston having a centerline. The air spring piston further includes at least one mounting boss adapted to receive a fastener for providing off-set mounting of the piston to a support, such as to a component of a vehicle. The at least one mounting boss has a geometric center that is spaced from the centerline of the inner cavity. The at least one mounting boss may be coupled to the outer wall and disposed in the inner cavity. In this embodiment, substantially the entire piston may be formed from a plastic. This embodiment may further include a support structure having a plurality of ribs projecting from the outer wall and at least one strut having a first end coupled to the outer wall at a first location and a second end coupled to the outer wall at a second location spaced from the first location such that the at least one strut does not intersect the centerline of the inner cavity. Additionally, the one strut may couple to the outer wall through the at least one mounting boss.

In yet another embodiment, an air spring for a vehicle having first and second components includes a first retainer plate adapted to be coupled to the first component of the vehicle. An elastomeric sleeve has a first end and a second end, wherein the first end is sealingly coupled to the first retainer plate. The air spring further includes a piston having a first end sealingly coupled to the second end of the sleeve and a second end adapted to be coupled to the second component of the vehicle. The piston includes an outer wall having a first end and a second end and defines an inner cavity of the piston having a centerline. The air spring piston further includes at least one mounting boss adapted to receive a fastener for providing off-set mounting of the piston to the second component of the vehicle. The at least one mounting boss has a geometric center that is spaced from the centerline of the inner cavity. Substantially the entire piston may be formed from a plastic.

These and other objects, advantages and features of the invention will become more readily apparent to those of ordinary skill in the art upon review of the following detailed description taken in conjunction with the accompanying drawings.

### Brief Description of the Drawings

The accompanying drawings, which are incorporated in and constitute a part of this specification, illustrate embodiments of the invention and, together with a general description of the invention given above, and the detailed description given below, serve to explain the invention.

Fig. 1 is a cross-sectional view of an air spring in accordance with one embodiment of the invention; and

Fig. 2 is a bottom perspective view of the piston in the air spring shown in Fig. 1 wither certain fasteners omitted for clarity of description.

### Detailed Description

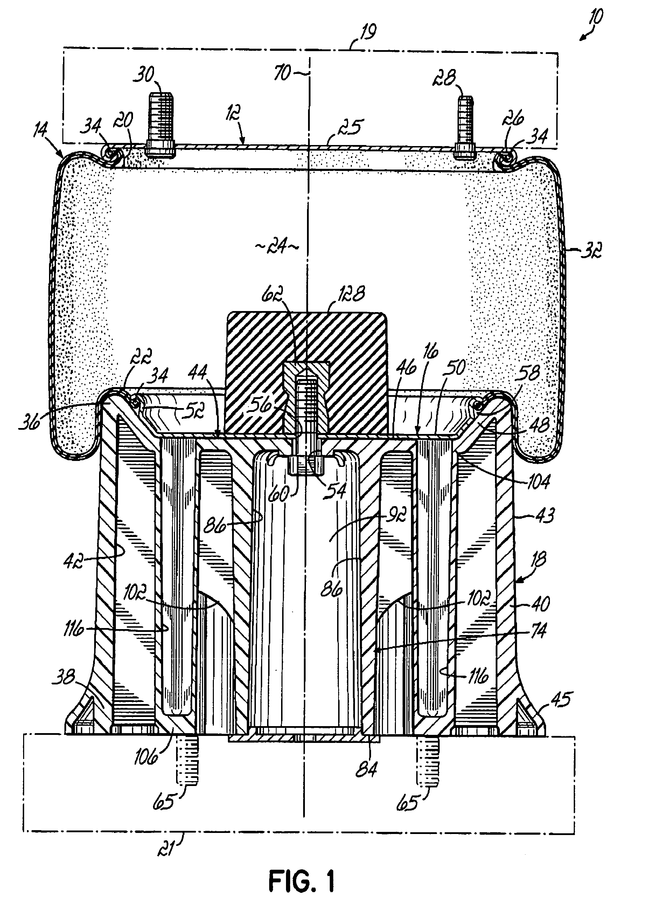

With reference to Fig. 1, a rolling lobe air spring 10 in accordance with an exemplary embodiment of the invention is illustrated. The air spring 10 includes a first retainer plate 12, an elastomeric sleeve 14, a second retainer plate 16, and a piston 18. The elastomeric sleeve 14 includes a first end 20 sealingly engaged with the first retainer plate 12 and a second end 22 sealing engaged with the second retainer plate 16 to form a pressurized chamber 24 within air spring 10. The first retainer plate 12 is adapted to be coupled to a first component or part of a vehicle, shown diagrammatically at 19, and the piston 18 is adapted to be coupled to a second component of the vehicle, shown diagrammatically at 21. The pressurized chamber 24 is filled with a gas, such as air, and is capable of absorbing loads applied to the vehicle.

The first retainer plate 12 may include interlocking structure for coupling the first retainer plate 12 to the first end 20 of sleeve 14 in a sealed manner. By way of example, first retainer plate 12 may include a base surface 25 and a downwardly turned U-shaped flange 26 along a periphery thereof that receives the first end 20 of sleeve 14 therein. First retainer plate 12 may further include at least one fastener for coupling the first retainer plate 12 to the first component of the vehicle 19. The fastener may include threaded studs 28, 30 or other such fasteners as recognized by those of ordinary skill in the art capable of securely fastening the first retainer plate 12 to the first component of the vehicle 19. The first retainer plate 12 may further include a port for introducing fluid into the pressurized chamber 24. In one embodiment, stud 30 may additionally operate as such a port. As is conventional, the first retainer plate 12 may be formed of metal.

The elastomeric sleeve 14 bounds at least a portion of the pressurized chamber 24 and allows compression and expansion thereof during loading of the air spring 10. The sleeve 14 may include at least one reinforcement layer 32 for providing some strength to the sleeve 14, but yet permitting the sleeve 14 to flex during use of air spring 10. The reinforcement layer 32 may be formed of cords such as conventional polyester, nylon, aramid, steel, or other suitable materials known to those of ordinary skill in the art. The chosen reinforcement material is application specific and determined by the forces to which the air spring 10 will be subjected upon use. Moreover, the length of sleeve 14 varies depending on the specific application and may be readily determined by those of ordinary skill in the art.

As noted above, the first end 20 of sleeve 14 is sealingly coupled to the flange 26 of first retainer plate 12. To this end, the first end 20 of sleeve 14 may include an internal bead 34, which is captivated within the flange 26 of first retainer plate 12, to strengthen the attachment therebetween. The bead 34 may be formed from steel cable wires or other conventional air spring bead construction materials. Although a flange/bead coupling is described herein, the sleeve 14 may be coupled to the first retainer plate 12 by other known conventional techniques, such as snapping the sleeve 14 onto the first retainer plate 12 or the use of a bead retaining ring located outward of the sleeve 14, as is illustrated in U.S. Patent No. 5,535,994. As illustrated in Fig. 1, the second end 22 of sleeve 14 may be captivated between the second retainer plate 16 and the piston 18 as described in more detail below. The second end 22 may also include a bead 34 similar to that described above for strengthening the attachment between the piston 18 and the sleeve 14.

As noted above, the piston 18 is configured to mount to a second component of the vehicle 21 and provide a surface on which sleeve 14 rolls during compression of the air spring 10. The piston 18 may be generally cylindrically shaped and have a first end 36 adapted to be coupled to the second retaining plate 16 and the second end 22 of sleeve 14, a second end 38 adapted to be coupled to the vehicle, and an outer wall 40 that extends between the first and second ends 36, 38 and defines an inner cavity 42. Although the piston 18 is described as being cylindrical, the invention is not so limited as other shapes (e.g., square, rectangular, etc.) are contemplated to be within the scope of the invention. As illustrated in Fig. 1, an outer surface 43 of outer wall 40 provides the rolling surface for sleeve 14 during compression of the air spring 10. Moreover, second end 38 may include a flared skirt 45.

In one embodiment, the first end 36 is generally a closed end defined by an end wall 44 that is configured to facilitate coupling of the second retainer plate 16 and second end 22 of sleeve 14 thereto. To this end, the end wall 44 is generally bowl shaped having a substantially flat base surface 46 and a sloping side surface 48 extending between the base surface 46 and the outer wall 40. The second retainer plate 16 has a shape complementary to the shape of end wall 44 and mates therewith to captivate the second end 22 of sleeve 14. Accordingly, the second retainer plate 16 includes a substantially flat base 50 and a flange 52 extending about base 50 and angled relative thereto. The second retainer plate 16 may be formed of metal as is generally known in the art.

As illustrated in Fig. 1, the second retainer plate 16 may be coupled to the piston 18 as part of the assembly of air spring 10. In this regard, the end wall 44 of piston 18 may include a central aperture 54 and the second retainer plate 16 includes a central aperture 56, such that when the second retainer plate 16 mates with the end wall 44, the apertures 54, 56 are coaxially aligned. Moreover, when the second retainer plate 16 mates with end wall 44, a channel 58 is formed between the flange 52 of the second retainer plate 16 and the sloping side surface 48 of the end wall 44 that is configured to receive the second end 22 of sleeve 14 therein. A threaded fastener, such as bolt 60 and nut 62, may be used to secure the second retainer plate 16 to the piston 18 and to essentially clamp the second end 22 of sleeve 14 to piston 18. Those of ordinary skill in the art will recognize other fasteners capable of securing the second retainer plate 16 to the piston 18 and coupling the sleeve 14 to piston 18. Moreover, more than one fastener, centrally and/or non-centrally located, may be used to secure second retainer plate 16 to piston 18.

While air spring 10 is described as including second retainer plate 16 for coupling sleeve 14 to piston 16, those of ordinary skill in the art will recognize that the second retainer plate 16 is optional and the elastomeric sleeve 14 may be secured to piston 18 without such a retainer plate. In this regard, various snap-on designs may be used to secure the sleeve 14 to the piston 18, as is generally known in the art. Moreover, although the first end 36 of piston 18 is described as being essentially closed by end wall 44, the invention is not so limited as at least a portion of the first end 36 may be open (e.g., air volume piston). Accordingly, the invention is not limited to the exemplary embodiment shown in the figures.

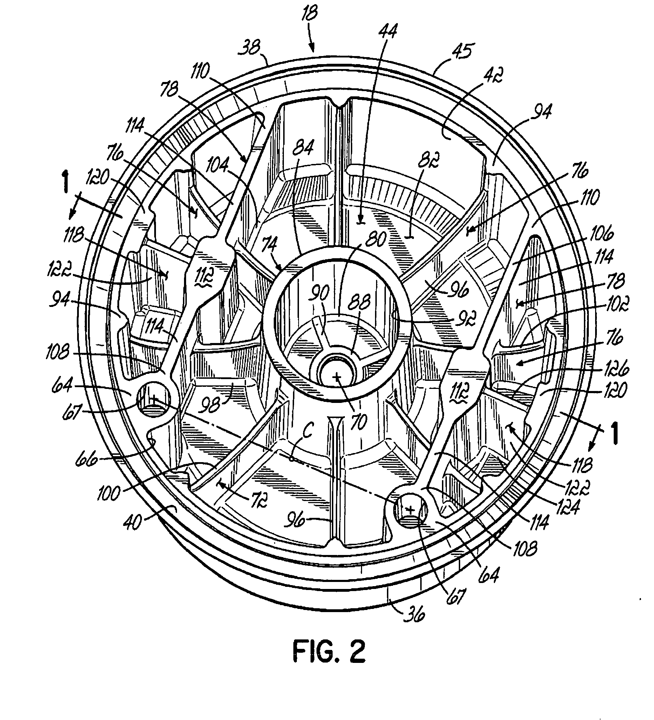

As illustrated in Fig. 2, the second end 38 of piston 18 is generally open and includes structure for mounting the piston 18 to the vehicle. In one aspect of the invention, the mounting structure may be configured for off-set mounting of air spring 10 to the vehicle. To this end, the piston 18 includes a pair of generally cylindrical bosses 64 coupled to the outer wall 40 for receiving fasteners, such as threaded studs 65 (shown in phantom in Fig. 1), for achieving the mounting to the vehicle. More particularly, the bosses 64 are coupled to outer wall 40 along an inner surface 66 thereof and disposed within inner cavity 42. The bosses 64 extend from second end 38 and toward first end 36. In one embodiment, the bosses 64 may extend the full length of the piston 18. Alternatively, the bosses 64 may extend for only a portion of the length of the piston 18 (not shown). Each of the bosses 64 includes an internal bore 67 for receiving a fastener, such as studs 65. By way of example, the bores 67 may be sized to receive a threaded stud 65 directly therein. Alternatively, the bores 66 may be sized to receive an insert (not shown), which is sized to receive a threaded stud 65. In any event, the bores 67 accommodate the fasteners for mounting the piston 18 to the vehicle.

For off-set mounting, the geometric center of the mounting structure is not aligned with or coaxial with a centerline 70 of air spring 10 (Fig. 1). For example, as illustrated in Fig. 2, the geometric center of bosses 64, which in the illustrated embodiment is the midpoint of the chord extending between bosses 64 and represented by the point C, is off set from centerline 70. It should be recognized that more or less mounting structure (e.g., bosses 64) may be used to achieve mounting of air spring 10 to the vehicle, depending on the particular application. Nevertheless, for off-set mounting, the geometric center of the mounting structure is offset from the centerline 70 of the air spring 10.

In another aspect of the invention, the piston 18 is substantially formed from a polymer or plastic, such as thermoplastic materials. As used herein, substantially formed from a plastic means that in the piston's operational state (i.e., capable of accommodating the forces on the air spring during operation) the piston 18 is 70% or higher by weight of plastic, and may be as high as over 90% by weight of plastic. More particularly, in various embodiments, the piston 18 may be formed from polyamide, polypropylene, or other suitable plastic resins or materials. The plastic material may be reinforced with various fillers, such as fiberglass or other solid filler materials as recognized by those of ordinary skill in the art. In one exemplary embodiment, the piston 18 is formed from polyamide with 30% fiberglass loading. Those of ordinary skill in the art will recognize other plastic materials, reinforced or non-reinforced, which may be used to form the piston 18 in accordance with the invention. Forming the piston 18 from plastic, as opposed to the more common metal, provides improved corrosion resistance, lower cost, lower weight, and other advantages. The plastic piston 18 may be formed by well-known processes, such as an injection molding process.

Unlike conventional off-set mounted air springs with plastic pistons, piston 18 is configured to withstand the increased forces due to the off-set mounting, but without the use of any metal backing plate to provide enhanced structural support. Accordingly, the benefits of using plastic in the piston construction will not be destroyed or significantly diminished in the inventive design. To provide for the increased loading due to off-set mounting without a backing plate, piston 18 includes an internal support structure, generally shown at 72, that provides the structural integrity to piston 18 to accommodate the increased loads due to the off-set mounting. The internal support structure 72 may be formed from plastic and is typically formed from the same material as outer wall 40 and end wall 44. Moreover, the internal support structure 72 may be integrally formed with the outer wall 40 and end wall 44, such as in a molding process. In other words, the piston 18 may be a unitary, integrally formed structure. The invention, however, is not so limited.

As shown in Fig. 2, internal support structure 72 includes a central hub 74, a plurality of ribs 76, and at least one strut 78. The central hub 74 has an elongated tubular configuration having a first end 80 coupled to an inner surface 82 of end wall 44, a second end 84, and a passage 86 extending therebetween. The hub 74 is aligned with the centerline 70 of air spring 10 such that the passage 86 is in communication with the central aperture 54 of end wall 44. Passage 86 is adapted to receive the fastener, such as bolt 62, that secures the second retainer plate 16 to the piston 18, as previously described. Central hub 74 may also include support structure adjacent end wall 44. In this regard, central hub 74 may include a support ring 88 surrounding central aperture 54 and a plurality of radially-extending support tabs 90 (e.g., four) extending from the support ring 88 to an inner wall 92 of the central hub 74. The second end 84 of central hub 74 may be coterminous with the second end 38 of the piston 18 (i.e., extend the full length of the piston 18). Alternatively, the second end 84 may be spaced from the second end 38 of piston 18 and toward the first end 80 (i.e., extend less than the full length of the piston 18).

In further reference to Fig. 2, a plurality of circumferentially spaced ribs 76 (eight shown) extend from the outer wall 40 and toward the central hub 74. In one embodiment at least one, and preferably each, of the ribs 76 extends to the central hub 74. Each rib 76 includes a bead portion 94 adjacent the outer wall 40 and a web portion 96 that extends from the bead portion 94 to the central hub 74. The ribs 76 have a first end 98 coupled to the inner surface 82 of end wall 44 and a second end 100 extending therefrom and toward the second end 38 of the piston 18. In this exemplary embodiment, the bead portion 94 extends substantially the full length of the piston 18 and the web portion 96 extends for only a portion of the length of the piston 18 (e.g., about 60% of the length). Those of ordinary skill in the art will recognize, however, that the bead portion 94 may extend for less than the full length of the piston 18 and/or the web portion 96 may extend for the full length of the piston 18. The web portion 96 includes a terminating edge 102 adjacent second end 100 that may be generally U-shaped. The terminating edge 102 may, however, have other configurations as well.

In addition to the support structure described above, internal support structure 72 further includes at least one, and preferably two or more, struts 78 (two shown) that enhance the structural integrity of piston 18 so as to accommodate the increased loading due to off-set mounting. Each strut 78 has a first end 104 coupled to the inner surface 82 of the end wall 44 and a second end 106 extending therefrom and toward the second end 38 of the piston 18. In this exemplary embodiment, the struts 78 extend substantially the full length of the piston 18. Alternatively, the struts 78 may extend for only a portion of the length of the piston 18 (not shown).

In one aspect, the struts 78 extend between two spaced locations of outer wall 40. More particularly, each strut 78 has a first side edge 108 coupled to the inner surface 66 of the outer wall 40 at a first location and a second side edge 110 coupled to the inner surface 66 of the outer wall 40 at a second location spaced from the first location such that the strut 78 does not extend through the centerline 70 of the air spring 10 (e.g, struts 78 are chords to outer wall 40). As shown in Fig. 2, the struts 78 may intersect one or more of the ribs 76. Moreover, the first side edge 108 of each of the struts 78 may couple to the inner surface 66 of the outer wall 40 via the mounting bosses 64. Thus, the struts 78 may support the mounting bosses 64 and provide additional support to the ribs 76.

The struts 78 may have a substantially constant thickness, which may, for example, be generally thicker than the ribs 76 (not shown), although not so limited. Alternatively, and as shown in Fig. 2, the struts 78 may include a thickened portion 112 intermediate the first and second side edges 108, 110 that defines thinner portions 114 on either side thereof. Such a configuration may provide the necessary structural support to piston 18 in a manner that minimizes material usage and related costs. In this regard, the thickened portions 112 may be hollow defining an open channel 116 that is closed at the second end 106 of struts 78 and open at first end 104 (Fig. 1).

The internal support structure 72 may further include one or more support tabs 118 (one shown for each strut 78) extending from the inner surface 66 of the outer wall 40 to the strut 78, such as at the thickened portion 112 of the strut 78. Each support tab 118 includes a platform portion 120 adjacent the outer wall 40 and a web portion 122 that extends from the platform portion 120 to the thickened portion 112 of the strut 78. The support tabs 118 have a first end 124 coupled to the inner surface 82 of the end wall 44 and a second end 126 extending therefrom and toward the second end 38 of the piston 18. In this exemplary embodiment, the support tabs 118 may extend substantially the full length of the piston 18. Alternatively, the support tabs 118 may extend for only a portion of the length of the piston 18.

The configuration of the internal support structure 72 provides the structural support to piston 18 that allows the piston to be formed substantially of plastic and used for off-set mounting to a vehicle, without the use of any metal backing plate. Accordingly, the advantages of plastic pistons, as realized in center-mounted air spring designs, may now be achieved for off-set mounted air spring designs.

While the present invention has been illustrated by a description of various preferred embodiments and while these embodiments have been described in some detail, it is not the intention of the Applicants to restrict or in any way limit the scope of the appended claims to such detail. Additional advantages and modifications will readily appear to those skilled in the art. For example, while the description of air spring 10 focused on the primary structural elements of the air spring, other well-known features may be incorporated into air spring 10. By way of example, and as shown in Fig. 1, the air spring 10 may include a bumper 128 associated with at least one of the first retainer plate 12 and second retainer plate 16 (shown coupled to second retainer plate 16). The bumper 128 is disposed on the plate(s) 12, 16 so as to be internal to pressurized chamber 24 and may be formed of relatively hard rubber or plastic to receive the maximum peak load or shock which causes the air spring 10 to bottom out. As illustrated, the nut 62 may be formed as an insert in bumper 128. The invention, however, is not so limited as other arrangements are also possible. Additionally, while the second end 38 of piston 18 was described as being generally open, those of ordinary skill in the art will realize that a cover (not shown) may be provided thereon for minimizing the accumulation of dirt and other debris within the piston during operation of the air spring. The cover, however, has little to no impact on the structural integrity of the piston.

Thus, the various features of the invention may be used alone or in numerous combinations depending on the needs and preferences of the user. What is claimed is:

## Claims

1. An air spring piston, comprising:
an outer wall having a first end and a second end and defining an inner cavity having a centerline; and
a support structure disposed in the inner cavity for providing structural support to the piston, the support structure including a plurality of radially-extending ribs projecting from the outer wall, and at least one strut having a first end coupled to the outer wall at a first location and a second end coupled to the outer wall at a second location spaced from the first location such that the at least one strut does not intersect the centerline of the inner cavity.

2. The air spring piston of claim 1, wherein the support structure includes a central hub disposed about the centerline of the inner cavity, at least one of the plurality of ribs extending from the outer wall to the central hub.

3. The air spring piston of claim 1, wherein the support structure includes a pair of struts.

4. The air spring piston of claim 3, wherein the pair of struts are aligned parallel to each other.

5. The air spring piston of claim 1, wherein the at least one strut has a thickened portion intermediate the first and second ends thereof.

6. The air spring piston of claim 5, wherein the thickened portion is hollow along at least a portion thereof.

7. The air spring piston of claim 1, wherein the support structure includes at least one support tab having a first end coupled to the outer wall and a second end coupled to the at least one strut.

8. The air spring piston of claim 1, further comprising:
at least one mounting boss adapted to receive a fastener, the at least one mounting boss coupled to the outer wall within the inner cavity.

9. The air spring piston of claim 8, wherein the at least one strut couples to the outer wall through the mounting boss.

10. An air spring for a vehicle having first and second components, comprising:
a piston having an outer wall with a first end and a second end and defining an inner cavity having a centerline, and at least one mounting boss adapted to receive a fastener for providing off-set mounting of the piston to the vehicle, the at least one mounting boss having a geometric center that is spaced from the centerline of the inner cavity, wherein substantially the entire piston is formed from a plastic.

11. The air spring of claim 10, wherein the at least one mounting boss is coupled to the outer wall and disposed in the inner cavity.

12. The air spring of claim 10, wherein the second end of the outer wall is open.

13. The air spring of claim 10, further comprising a support structure disposed in the inner cavity for providing structural support to the piston, the support structure including a plurality of radially-extending ribs projecting from the outer wall, and at least one strut having a first end coupled to the outer wall at a first location and a second end coupled to the outer wall at a second location spaced from the first location such that the at least one strut does not intersect the centerline of the inner cavity.

14. The air spring of claim 13, wherein the at least one strut couples to the outer wall through the at least one mounting boss.

15. The air spring of claim 10, further comprising:
a first retainer plate adapted to be coupled to the first component of the vehicle; and
an elastomeric sleeve having a first end and a second end, the first end of the sleeve sealingly coupled to the first retainer plate,
wherein a first end of the piston is sealingly coupled to the second end of the sleeve and a second end of the piston is adapted to be coupled to the second component of the vehicle.
